# FASCICULE DE BREVET EUROPEEN

(11) **EP 1 095 220 B1**
(45) Date de publication et mention de la délivrance du brevet: **20.08.2003**
(21) Numéro de dépôt: 00922784.4
(22) Date de dépôt: 28.04.2000
(51) Int. Cl.: F16B 37/10

(54) **ECROU A MONTAGE ET DEMONTAGE RAPIDE**
SCHNELL MONTIERBARE UND DEMONTIERBARE MUTTER
QUICKLY MOUNTABLE AND REMOVABLE NUT

(30) Priorité: 28.04.1999 FR 9905349
(43) Date de publication de la demande: 02.05.2001
(73) Titulaire: Oliveira et Irmao S.A., 3801-851 Aveiro (PT); ALLIA (S.A.), 92100 Boulogne Billancourt (FR)
(72) Inventeur: MOURA DE OLIVEIRA, Antonio, Manuel, P-3800 Aveiro (PT); COUTY, Alain, F-91630 Marolles en Hurepoix (FR); ETAIX, Gérard, F-71160 La Motte St. Jean (FR)
(74) Mandataire: Viard, Jean
(86) Numéro de dépôt international: FR0001142
(87) Numéro de publication internationale: WO00066899

(56) Documents cités:
- US-A- 3 352 341
- US-A- 5 749 691

## Description

La présente invention a pour objet une écrou à montage et démontage rapide pouvant s'adapter sur des vis de filetage standard destiné en particulier, mais non exclusivement, à des appareils sanitaires.

Il est souvent nécessaire de visser et de dévisser rapidement un écrou sur une tige filetée qui peut être plus ou moins longue. Dans le cas où les tiges de vis sont longues, ces opérations requièrent un temps important. Dans les appareils sanitaires, on doit fixer d'une part le réservoir de chasse d'eau sur la cuvette et l'abattant sur celle-ci, les emplacements de ces fixations étant en général difficilement accessibles.

On a déjà proposé des écrous rapides dans lesquels le filetage femelle est constitué d'au moins deux parties qui peuvent être disjointes, cas dans lequel l'écrou peut glisser librement sur la tige de vis, les filets du filetage femelle n'étant pas en prise avec les filets de la vis, et qui peuvent ensuite être réunies pour former le filetage femelle interne traditionnel.

Dans le brevet FR-A- 1 382 310, les deux parties de l'écrou métallique sont montées pivotantes l'une sur l'autre et le « débrayage » s'effectue par pincement de la partie arrière de l'écrou qui peut être rappelé en position « embrayée », par exemple au moyen d'un ressort.

D'autres dispositifs de ce type sont décrits, par exemple, dans US-A-2 789 458 et US-A-2 257 327.

US-A-5 749 691 décrit un écrou rapide pouvant être posé sur une vis raccordée à un dispositif de tension hydraulique. Cet écrou comprend une partie mobile expansible radialement reposant sur deux parties coniques dont l'une est déplaçable axialement sous l'action de ressorts. La commande d'ouverture ou de fermeture de l'écrou est obtenue par appui sur une bague externe qui déplace la partie mobile. Ainsi, au repos, l'écrou est toujours en prise sur la vis. Et il nécessite un grand nombre de pièces. Mais ces écrous rapides métalliques font appel à des constructions relativement complexes.

Un premier objet de l'invention est de pallier cet inconvénient et de permettre une structure et une utilisation simplifiées d'une telle fixation rapide.

Selon l'invention, l'écrou rapide comprenant un filetage femelle séparable en au moins deux mors, est caractérisé en ce qu'il comprend un corps cylindrique creux à l'intérieur duquel est montée coulissante une pièce d'appui dont la face avant est en saillie à l'extérieur du corps, présentant un alésage conique et une pièce mobile en forme de diabolo, constituée d'au moins deux mors séparables dont chacun porte un secteur de filetage femelle, la pièce mobile étant montée coulissante à l'intérieur du corps.

Ainsi, c'est un mouvement relatif de translation du corps par rapport aux éléments de la pièce en diabolo qui permet l'»embrayage » du filetage femelle du diabolo avec le filet mâle de la vis. Et c'est la rondelle conique qui, par contact avec la face d'appui de la pièce à assembler, par exemple en céramique, permet le resserrement des mors et la venue en prise du filetage femelle avec le filetage mâle de la vis.

Selon une autre caractéristique de l'invention, les mors séparables sont rappelées en position écartée par un anneau élastique.

La fixation est constituée par un ensemble de pièces moulées, les pièces extérieures étant assemblées par encliquetage.

D'autres caractéristiques et avantages de l'invention apparaîtront au cours de la description qui va suivre d'un mode particulier de réalisation, donné uniquement à titre d'exemple non limitatif, en regard des dessins qui représentent :
- la figure 1, une vue éclatée de la fixation selon l'invention;
- la figure 2, une vue en coupe verticale de la vis et de l'écrou avant assemblage;
- la figure 3, une vue en coupe verticale de la vis et de l'écrou après montage de l'écrou sur la vis, mais avant serrage;
- la figure 4, une vue en coupe verticale de l'écrou après serrage.

Sur l'ensemble des figures, les mêmes références désignent les mêmes éléments. Dans l'exemple représenté, la fixation comprend trois mors, mais ce nombre peut varier de deux à plus de trois.

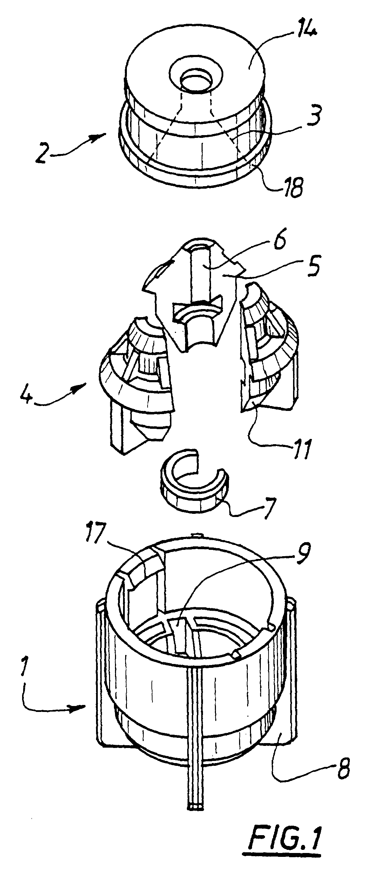

Sur la figure 1, on voit que la fixation se compose essentiellement de trois parties: un corps ou cage 1, cylindrique creux comprenant des rainures de guidage 9 et une partie conique, une pièce d'appui ou rondelle 2 et une pièce 4 en forme générale de diabolo qui, dans l'exemple représenté est constituée par l'assemblage de trois mors 5. Les composants sont assemblés par encliquetage à l'intérieur du corps 1 et la pièce d'appui 2 est maintenue par un rebord 17 dont le diamètre est inférieur à ce lui du bord 18 de la rondelle 2. Lors du montage, l'approche en position est facilitée par le fait que les secteurs filetés sont écartés sous l'action de l'anneau 7. Au contact de la face d'appui, la rondelle conique emprisonne les secteurs filetés ce qui entraîne leur resserrement et rend possible le vissage par rotation de l'écrou. Une bague ou anneau fendu 7, formant ressort tend à maintenir séparés, en permanence, les mors 5. On remarquera que le diamètre interne de la bague 7 est tel que celle-ci n'entre jamais en contact avec la vis 20.

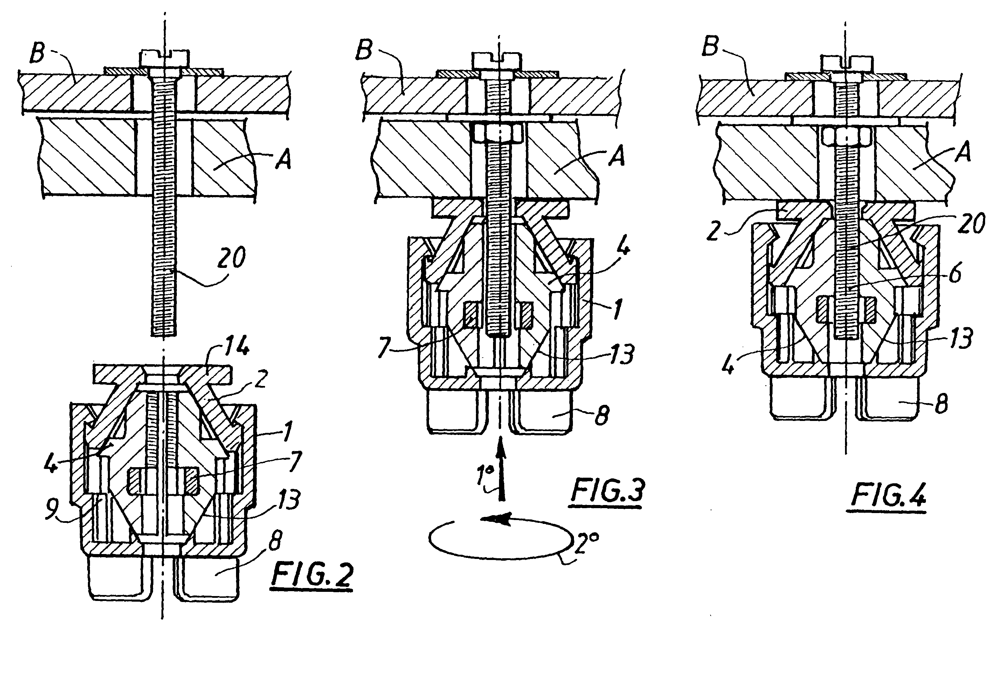

On retrouve ces éléments, assemblés par encliquetage, sur les figures 2 à 4. Sur ces figures, l'écrou à montage et démontage rapide est destiné à assembler deux pièces A et B par l'intermédiaire de la vis 20. La pièce B est, par exemple un réservoir de chasse d'eau ou un abattant de cuvette W-C.

Sur la figure 2, on voit que les mors présentent à leur partie avant (ou supérieure sur les figures) un chanfrein dont l'angle est égal à l'angle de conicité du cône 3. La partie arrière de la pièce 2 coulisse dans le corps 1. La partie arrière (ou inférieure sur les figures) du diabolo 4 coulisse dans des rainures 9 du corps 1. La partie arrière 11 du diabolo 4 est essentiellement conique et peut glisser sur la surface 13.

Sur la figure 2, la surface avant 14 de la pièce 2 occupe sa position de saillie maximale. Par contre le diabolo 4 est en position relâchée. Sous l'effet du ressort 7, les portions de filets 6 ne sont pas en contact de sorte que l'écrou peut être librement glissé sur la vis 20.

Comme cela apparaît sur la figure 3, lorsque la surface 14 arrive en contact avec la surface inférieure de la pièce A et que l'on maintient la pression du corps 1 vers la face d'appui A (comme symbolisé par la flèche (1°)), il se produit une compression du ressort 7 et le resserrement des mors 5 entraînant la venue en prise des secteurs 6 contre le filetage de la vis 20. Il est alors possible de procéder à un serrage efficace de la pièce inférieure A contre la pièce B en tournant le corps 1 comme symbolisé par la flèche (2°).

La fixation étant dans la position de serrage représentée sur la figure 4, on peut desserrer légèrement l'écrou, il suffit de tirer la cage 1 vers l'arrière (le bas sur la figure), la pièce 2 restant en position. La bague 7, comprimée radialement lors du serrage, se détend et ouvre immédiatement les mors 5 puisque ceux-ci ne sont plus en appui contre la cage, le contact des filetages 6 avec les filets de la bague 20 étant immédiatement interrompu. L'écrou peut glisser sur la vis et être extrait de celle-ci. La pièce ou rondelle conique 2 est encliquetée à l'intérieur de la cage 1 de manière à ce que l'ensemble forme un tout indissociable.

Il va de soi que de nombreuses variantes peuvent être apportées, notamment par substitution de moyens techniques équivalents, sans sortir pour cela du cadre de l'invention.

## Revendications

1. Écrou à montage et démontage rapide, destiné à des vis standardisées, comprenant un filetage femelle séparable en au moins deux mors (5), présentant chacun un secteur fileté (6) pouvant coopérer avec la vis, et constituant, par juxtaposition, une pièce (4) mobile et expansible à l'intérieur d'un corps (1), la pièce (4) comportant une portée conique (5) à l'avant et une portée conique (13) à l'arrière, la portée conique (13) s'appuyant dans un alésage conique du corps (1), les mors (5) étant rappelés en position écartée par un anneau élastique (7) inséré à l'intérieur de la pièce (4),
**caractérisé en ce qu'**une rondelle d'appui (2), présentant un alésage central conique (3), est montée coulissante à l'intérieur du corps (1), la face avant de la dite rondelle (2) étant en saillie par rapport au corps (1) sous l'action de l'anneau élastique (7), les mors (5) étant écartés par appui sur le bord conique (3) de la rondelle (2), et rapprochés l'un de l'autre à l'intérieur du corps (1) par un mouvement relatif de la rondelle (2) par rapport au corps (1).

2. Écrou à montage et démontage rapide selon la revendication 1, **caractérisé en ce qu'**il est constitué par un ensemble de pièces moulées (1,2,4,7), les pièces (1,2) étant assemblées par encliquetage.

3. Écrou à montage et démontage rapide selon la revendication 1, **caractérisé en ce qu'**il comprend trois mors (5).

## Patentansprüche

1. Schnell montierbare und demontierbare Mutter, für Standardschrauben bestimmt, mit einem Gewindegang, der in mindestens zwei Spannbacken (5) trennbar ist, die jeweils einen mit der Schraube zusammenarbeitenden Gewindeabschnitt (6) aufweisen und die, durch Nebeneinanderstellen, einen beweglichen und im Inneren eines Körpers (1) dehnbaren Teil (4) bilden, wobei der Teil (4) einen konischen Bereich (5) vorne und einen sich auf einer konischen Bohrung des Körpers (1) abstützenden konischen Bereich (13) hinten aufweist, und die Spannbacken (5) in die gespreizte Stellung durch einen ins Innere des Teils (4) eingelegten elastischen Ring (7) zurückgeführt werden, **dadurch gekennzeichnet, dass** eine eine konische Zentralbohrung (3) aufweisende Stützscheibe (2) im Inneren des Körpers (1) gleitend angeordnet ist, wobei die Vorderseite der Scheibe (2) unter der Wirkung des elastischen Rings (7) über den Körper (1) vorsteht, und die Spannbacken (5) durch das Abstützen auf dem konischen Rand (3) der Scheibe (2) gespreizt und im Inneren des Körpers (1) durch eine relative Bewegung der Scheibe (2) in bezug auf den Körper (1) aufeinander zugestellt werden.

2. Schnell montierbare und demontierbare Mutter gemäss Anspruch 1, **dadurch gekennzeichnet, dass** diese aus einer Gesamtheit von Formteilen (1, 2, 4, 7) zusammengesetzt ist, wobei die Teile (1, 2) mittels Einrasten verbunden werden.

3. Schnell montierbare und demontierbare Mutter gemäss Anspruch 1, **dadurch gekennzeichnet, dass** diese drei Spannbacken (5) aufweist.

## Claims

1. Quickly mountable and removable nut, provided for standard screws, comprising a female threading divisible into at least two clamping jaws (5), each having a threaded sector (6) able to co-operate with the screw, and forming, by juxtaposition, a part (4) which is movable and expansible within a body (1), the part (4) comprising a conical bearing area (5) at the front thereof and a conical bearing area (13) at the rear thereof, the conical bearing area (13) leaning into a conical boring of the body (1), the clamping jaws (5) being returned in a spaced apart position by an elastic ring (7) which is inserted within the part (4),
**characterized in that** a bearing washer (2), having a conical central boring (3), is slidably mounted within the body (1), the front face of said washer (2) protruding with respect to the body (1) under the action of the elastic ring (7), the clamping jaws (5) being spaced apart by leaning onto the conical edge (3) of the washer (2), and being made close together within the body (1) by a relative movement of the washer (2) with respect to the body (1).

2. Quickly mountable and removable nut according to claim 1, **characterized in that** it is formed by an assembly of moulded parts (1,2,4,7), the parts (1,2) being fit together by snapping.

3. Quickly mountable and removable nut according to claim 1, **characterized in that** it comprises three clamping jaws (5).
